# EUROPÄISCHE PATENTSCHRIFT

(11) **EP 4 374 475 B1**
(45) Veröffentlichungstag und Bekanntmachung des Hinweises auf die Patenterteilung: **19.08.2026**
(21) Anmeldenummer: 22735085.7
(22) Anmeldetag: 08.06.2022
(51) Int. Cl.: H02K 3/24

(54) **STATOR EINER ELEKTRISCHEN MASCHINE**
STATOR OF AN ELECTRIC MACHINE
STATOR D'UNE MACHINE ÉLECTRIQUE

(30) Priorität: 23.07.2021 DE 102021207922
(43) Veröffentlichungstag der Anmeldung: 29.05.2024
(73) Patentinhaber: Robert Bosch GmbH, 70442 Stuttgart (DE)
(72) Erfinder: BENSING, Felix, 70437 Stuttgart (DE); STAMMLER, Jannik, 70197 Stuttgart (DE); KUEHBACHER, Daniel, 70569 Stuttgart (DE)
(86) Internationale Anmeldenummer: PCT/EP2022/065453
(87) Internationale Veröffentlichungsnummer: WO 2023/001445

(56) Entgegenhaltungen:
- CN-B- 102 420 468
- DE-A1- 102019 113 785
- JP-U- S5 449 520

## Beschreibung

### Stand der Technik

Die Erfindung geht aus von einem Stator einer elektrischen Maschine nach der Gattung des Hauptanspruchs.

Es ist schon ein Stator einer elektrischen Maschine aus der DE102019113785 A1 bekannt, mit einer Statorachse und mit einem Blechpaket, an dem Statorzähne und zwischen den Statorzähnen liegende Statornuten ausgebildet sind und das eine Vielzahl von Blechlamellen umfasst, wobei die Statorzähne über ein ringförmiges Statorjoch miteinander verbunden sind, wobei in den Statornuten jeweils ein mehrere Leiter umfassendes Leiterbündel zur Bildung einer elektrischen Statorwicklung vorgesehen ist, wobei die Statornuten jeweils einen dem Statorjoch zugewandten Nutgrund und einen dem Nutgrund abgewandten Nutschlitz aufweisen, wobei in den Statornuten jeweils mehrere, in axialer Richtung bezüglich der Statorachse voneinander beabstandete Stützstellen zur Abstützung des in der jeweiligen Statornut liegenden Leiters bzw. Leiterbündels gebildet sind, wobei zwischen den Wandungen der jeweiligen Statornut und dem in der Statornut angeordneten Leiterbündel zumindest ein Nutspalt gebildet ist, der einen sich in axialer Richtung erstreckenden Nutspaltkanal bildet, der von einem Kühlmedium, insbesondere Öl, entlang einem Kühlpfad durchströmbar ist, wobei der jeweilige Nutspaltkanal an den Stützstellen zumindest verengt ist. Es ist nicht gewährleistet, dass das jeweilige Leiterbündel im Nutspaltkanal entlang des Kühlpfades gleichmäßig gekühlt wird, da sich beispielsweise eine ungleichmäßige Strömungsverteilung über den Strömungsquerschnitt des Nutspaltkanals einstellen kann.

### Vorteile der Erfindung

Der erfindungsgemäße Stator einer elektrischen Maschine mit den kennzeichnenden Merkmalen des Hauptanspruchs hat demgegenüber den Vorteil, dass das jeweilige Leiterbündel im Nutspaltkanal entlang des Kühlpfades gleichmäßiger gekühlt wird. Dies wird erfindungsgemäß erreicht, indem der Nutschlitz der jeweiligen Statornut von einem Nutverschluss verschlossen ist, in der jeweiligen Statornut an den Stützstellen jeweils ein Bypass vorgesehen ist zum Leiten des Kühlmediums an der verengten Stützstelle im Nutspaltkanal vorbei, und indem die Bypässe an den unterschiedlichen Stützstellen derselben Statornut derart an unterschiedlichen radialen Positionen angeordnet sind, dass ein mäanderförmiger Kühlpfad in der Statornut gebildet ist. Durch die in den Unteransprüchen aufgeführten Maßnahmen sind vorteilhafte Weiterbildungen und Verbesserungen des im Hauptanspruch angegebenen Stators einer elektrischen Maschine möglich.

Erfindungsgemäß sind die Bypässe der unterschiedlichen Stützstellen derselben Statornut jeweils derart entweder am Nutgrund, insbesondere im Nutgrund oder in den Zahnflanken am Nutgrund, oder im Nutverschluss ausgebildet, dass ein mäanderförmiger Kühlpfad in der Statornut gebildet ist. Auf diese Weise wird ein mäanderförmiger Kühlpfad mit in radialer Richtung sich weit erstreckenden Mäandern und damit eine sehr gleichmäßige Kühlung in der Statornut erreicht.

Nach einem vorteilhaften Ausführungsbeispiel sind die Bypässe der unterschiedlichen Stützstellen derselben Statornut zur Bildung des mäanderförmigen Kühlpfads von einer Stützstelle zur nächsten Stützstelle abwechselnd im Nutgrund oder im Nutverschluss ausgebildet. Alternativ können die Mäander in axialer Richtung gesehen auch länger ausgebildet sein.

Sehr vorteilhaft ist es, wenn der Bypass jeweils durch einen beispielsweise nutförmigen Bypasskanal gebildet ist. Auf diese Weise kann der Bypass sehr einfach in der jeweiligen Statornut des Blechpaketes des Stators hergestellt werden. Wenn der Bypasskanal eine Kanalbreite hat, die kleiner ist als eine Leiterbreite des Leiters bzw. Leiterbündels, wird vorteilhafterweise sichergestellt, dass der Leiter bzw. das Leiterbündel nicht den Bypasskanal verschließen oder blockieren kann, beispielsweise durch Hineinrutschen in den Bypasskanal.

Auch vorteilhaft ist, wenn das Blechpaket eine Vielzahl von identischen Blechlamellen aufweist, wobei jede einzelne der identischen Blechlamellen eine Vielzahl von Nut-Ausnehmungen zur Bildung der Statornuten aufweist, wobei bezüglich einer einzelnen der Blechlamellen im Nutgrund von bestimmten Nut-Ausnehmungen, die sich nach einem Muster bestimmen und über den Umfang verteilt sind, eine Bypass-Ausnehmung zur Bildung des Bypasskanals vorgesehen ist. An den übrigen Nut-Ausnehmungen der Blechlamelle sind keine Bypass-Ausnehmungen ausgeführt. Auf diese Weise können mit derselben Blechlamelle in jeder Statornut des Blechpakets an vorbestimmten axialen Positionen Bypässe am Nutgrund der jeweiligen Statornut erzeugt werden. Die Herstellungskosten des Blechpakets werden also trotz der zusätzlich vorgesehenen erfindungsgemäßen Bypässe nicht oder nicht wesentlich erhöht.

Dies kann vorteilhafterweise erreicht werden, indem im Blechpaket mehrere der identischen Blechlamellen derart um die Statorachse verdreht sind, dass die Bypässe in den einzelnen Statornuten an der bestimmten axialen Position und über eine bestimmte Länge gebildet sind.

Nach einem vorteilhaften Ausführungsbeispiel können die Nutverschlüsse der Statornuten jeweils durch ein einzelnes Nutverschlusselement gebildet oder einstückig oder mehrstückig an einem Spaltrohr ausgeführt sein.

Außerdem vorteilhaft ist, wenn die Stützstellen gebildet sind durch Verdrehen von zumindest zwei Blechlamellen des Blechpakets um einen bestimmten Verdrehwinkel um die Statorachse. Auf diese Weise wird das Leiterbündel der jeweiligen Statornut an der jeweiligen Stützstelle zwischen zwei Zahnflanken eingeklemmt. Zur Gewährleistung eines Schutzes der elektrischen Isolation am Leiter oder Leiterbündel kann im Bereich der Stützstelle ein Schutzelement um das Leiterbündel herum als Alternative zu üblicherweise vorgesehenem Nutisolationspapier vorgesehen sein. Es kann dadurch möglich sein, auf den Einsatz von Tränkharz als Isolation in einem Nutspalt zwischen dem Blechpaket und dem Leiterbündel zumindest teilweise zu verzichten.

Weiter vorteilhaft ist, wenn durch das Verdrehen der Blechlamellen des Blechpakets zur Bildung der jeweiligen Stützstelle Stützabschnitte der Blechlamellen gebildet sind, die von gegenüberliegenden Seiten der jeweiligen Statornut in die Statornut vorstehen, um den Leiter bzw. das Leiterbündel zwischen den Stützabschnitten an Halteflächen des Leiters bzw. Leiterbündels zu halten, insbesondere einzuklemmen. Auf diese Weise gelingt es, den Leiter bzw. das Leiterbündel in Umfangsrichtung bezüglich der Statorachse mittig oder zentrisch in der jeweiligen Statornut zu lagern.

Die Erfindung betrifft weiterhin eine elektrische Maschine mit einem Gehäuse, in dem ein erfindungsgemäßer Stator angeordnet ist, wobei die Statorwicklung an jeder Stirnseite des Stators einen Wickelkopf bildet, wobei innerhalb des Gehäuses an jeder Stirnseite des Stators ein den jeweiligen Wickelkopf aufnehmender Wickelkopfkühlraum zur Kühlung des jeweiligen Wickelkopfes vorgesehen ist, wobei die Statornuten ausgehend von einem der beiden Wickelkopfkühlräume über den Kühlpfad der Statornuten bis in den anderen Wickelkopfkühlraum durchströmbar sind. Auf diese Weise kann eine besonders gute Kühlung des Stators erreicht werden.

### Zeichnung

Ein Ausführungsbeispiel der Erfindung ist in der Zeichnung vereinfacht dargestellt und in der nachfolgenden Beschreibung näher erläutert.
- Fig.1: zeigt eine Teilansicht eines erfindungsgemäßen Stators einer elektrischen Maschine,
- Fig.2: eine Schnittansicht des Stators nach Fig.1 mit einem erfindungsgemäß in einer der Statornuten an mehreren Stützstellen gelagerten Leiterbündel,
- Fig.3: eine Teilansicht einer elektrischen Maschine im Längsschnitt durch eine Statornut des erfindungsgemäßen Stators nach Fig.1 und Fig.2, und
- Fig.4: eine der Blechlamellen des erfindungsgemäßen Stators nach Fig.1 bis Fig.3.

### Beschreibung des Ausführungsbeispiels

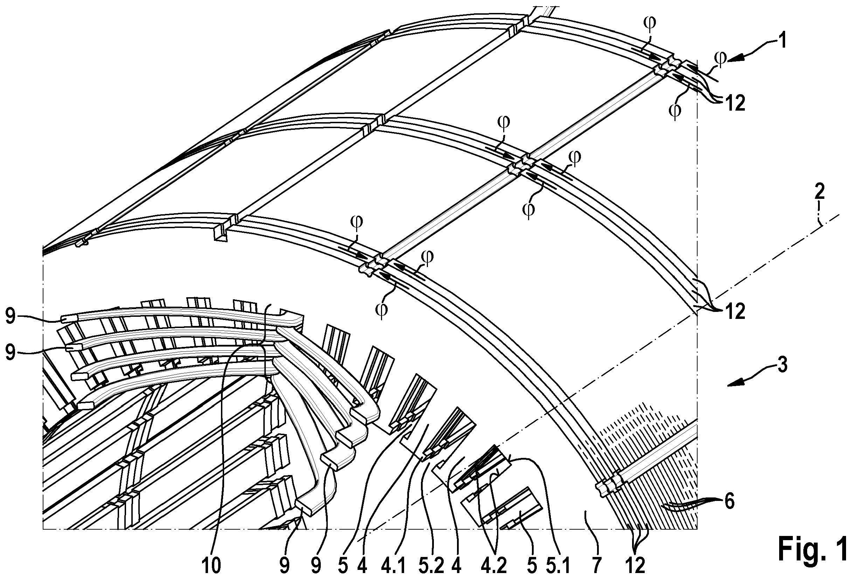

Fig.1 zeigt eine Teilansicht eines erfindungsgemäßen Stators einer elektrischen Maschine.

Der Stator 1 einer elektrischen Maschine hat eine Statorachse 2 und umfasst ein Blechpaket 3, an dem Statorzähne 4 und zwischen den Statorzähnen 4 liegende Statornuten 5 ausgebildet sind und das durch einen Stapel von Blechlamellen 6 gebildet ist.

Die Statorzähne 4 sind über ein ringförmiges Statorjoch 7 des Blechpakets 3 miteinander verbunden und können einen Zahnkopf 4.1 aufweisen. In den Statornuten 5 kann jeweils entweder ein einziger elektrische Leiter 9 oder ein mehrere Leiter 9 umfassendes Leiterbündel 10 zur Bildung einer elektrischen Statorwicklung 8 vorgesehen sein. Zur Veranschaulichung der Erfindung ist in Fig.1 nur in einer der Statornuten 5 ein Leiterbündel 10 dargestellt.

Die elektrischen Leiter 9 des Stators 1 können jeweils als Flachdrahtleiter ausgeführt sein, der jeweils einen viereckigen, insbesondere rechteckförmigen Leiterquerschnitt aufweist. Weiterhin können die Leiter 9 des Stators 1 jeweils als Hairpin- oder als I-Pin-Leiterelement ausgebildet sein. Die Leiter 9 sind beispielsweise in bekannter Weise mit einem Isolierlack beschichtet.

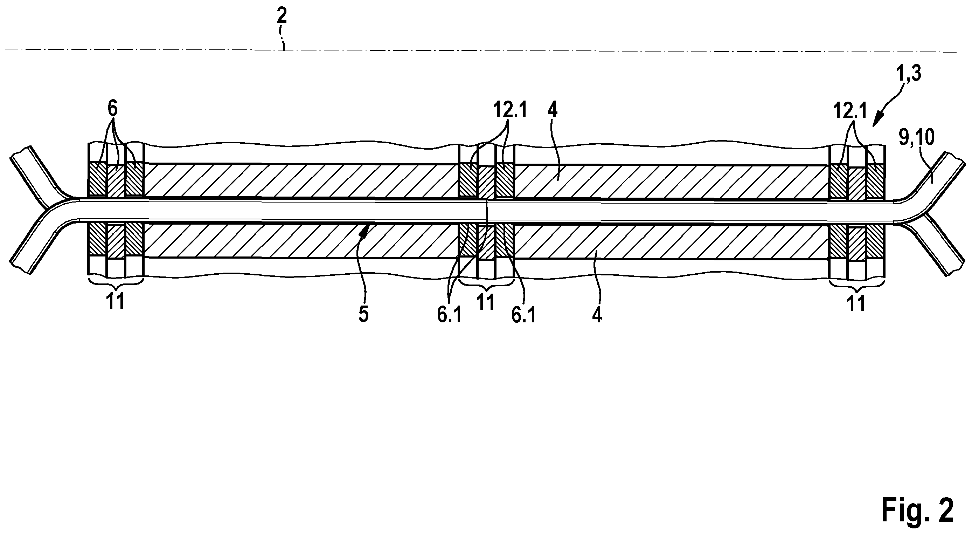

Fig.2 zeigt eine Schnittansicht des Stators nach Fig.1 mit einem erfindungsgemäß in einer der Statornuten an mehreren Stützstellen gelagerten Leiterbündel.

Wie in Fig.2 gezeigt, sind in den Statornuten 5 jeweils mehrere, beispielsweise drei, in axialer Richtung bezüglich der Statorachse 2 voneinander beabstandete Stützstellen 11 zur Einklemmung, Einspannung oder Abstützung des in der jeweiligen Statornut 5 liegenden Leiters 9 bzw. Leiterbündels 10 gebildet.

Die Stützstellen 11 können beispielsweise gebildet sein durch Verdrehen von jeweils zumindest zwei Blechlamellen 6 des Blechpakets 3 um einen bestimmten Verdrehwinkel ϕ um die Statorachse 2. Durch das Verdrehen der Blechlamellen 6 zur Bildung der jeweiligen Stützstelle 11 werden Stützabschnitte 6.1 der Blechlamellen 6 gebildet, die von gegenüberliegenden Seiten der Statornut 5 in die jeweilige Statornut 5 vorstehen, um das Leiterbündel 10 zwischen den Stützabschnitten 6.1 an Halteflächen 13 des Leiterbündels 10 zu halten, beispielsweise einzuklemmen. Die verdrehten Blechlamellen 6 sind im Blechpaket 3 gegen weiteres Verdrehen fixiert, insbesondere durch stoffschlüssiges Fügen, so dass stabile und dauerhaltbare Stützstellen 11 im Blechpaket 3 gebildet sind.

Zwischen den erfindungsgemäßen Stützstellen 11 ist das Leiterbündel 10 der jeweiligen Statornut 5 beispielsweise frei schwebend, also ohne Kontakt zum Blechpaket 3, gelagert. Das Leiterbündel 10 der jeweiligen Statornut 5 ist also beispielsweise nur an den Stützstellen 11 mit dem Blechpaket 6 in Kontakt.

Zwischen dem Leiterbündel 10 der jeweiligen Statornut 5 und der jeweiligen Stützstelle 11 kann eine nicht dargestellte Schutzschicht vorgesehen sein, die insbesondere manschettenförmig, hülsenförmig, schlauchförmig, klammerförmig, U-förmig, streifenförmig oder flachbandförmig ausgebildet ist.

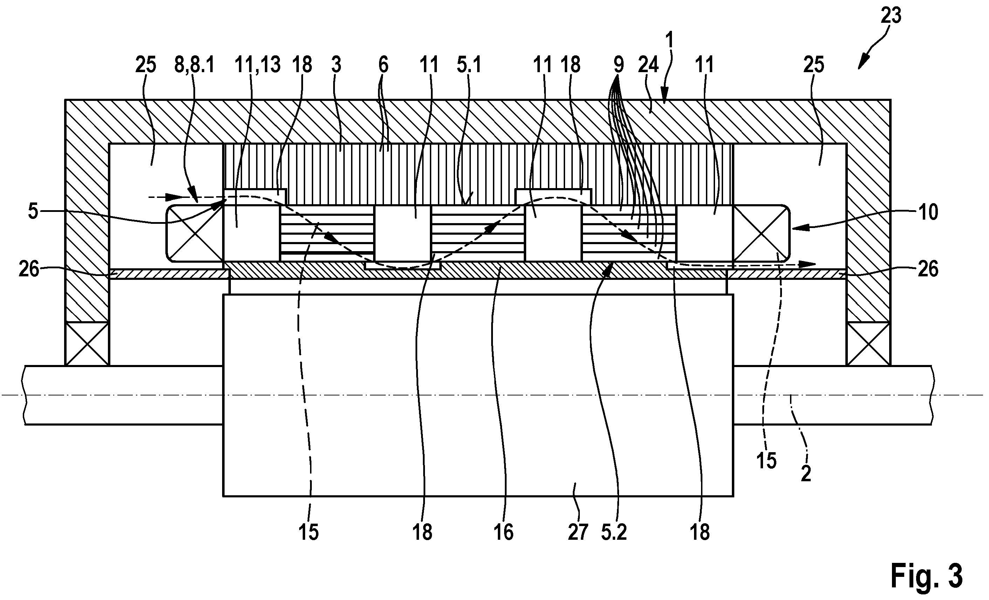

Fig.3 zeigt eine Teilansicht einer elektrischen Maschine im Längsschnitt mit dem erfindungsgemäßen Stator nach Fig.1 bis Fig.2.

Die Statornuten 5 haben jeweils einen dem Statorjoch 7 zugewandten Nutgrund 5.1 und einen dem Nutgrund 5.1 abgewandten Nutschlitz 5.2, der insbesondere zwischen zwei Zahnköpfen 4.1 der jeweiligen Statorzähne 4 gebildet ist.

Zwischen den Wandungen der jeweiligen Statornut 5 und dem in der Statornut 5 angeordneten Leiter 9 bzw. Leiterbündel 10 ist zumindest ein Nutspalt ausgeführt, der einen sich in axialer Richtung erstreckenden Nutspaltkanal 14 bildet, der von einem Kühlmedium, insbesondere Öl, entlang einem Kühlpfad 15 durchströmbar ist.

Der jeweilige Nutspaltkanal 14 der Statornuten ist an den Stützstellen 11 zumindest verengt.

Erfindungsgemäß ist vorgesehen, dass der Nutschlitz 5.2 der jeweiligen Statornut 5 in radialer Richtung gesehen zu einem sogenannten Luftspalt hin von einem Nutverschluss 16 verschlossen ist und in der jeweiligen Statornut 5 an den Stützstellen 11 jeweils ein Bypass 18 vorgesehen ist, um das Kühlmedium an der verengten Stützstelle 11 im Nutspaltkanal 14 vorbeizuleiten. Zusätzlich ist erfindungsgemäß vorgesehen, dass die Bypässe 18 an den unterschiedlichen Stützstellen 11 derselben Statornut 5 derart an unterschiedlichen bezüglich der Statorachse 2 radialen Positionen angeordnet sind, dass ein mäanderförmiger Kühlpfad 15 in der Statornut 5 gebildet ist. Der Nutverschluss 16 dichtet den Nutspaltkanal 14 in radialer Richtung zu dem Luftspalt hin dicht oder zumindest quasi dicht ab.

Der mäanderförmige Kühlpfad 15 weist zumindest einen Mäander auf, der in Strömungsrichtung gesehen entlang einer Längserstreckung der Statornut 5 vom Nutgrund 5.1 über den Nutschlitz 5.2 zum Nutgrund 5.1 oder vom Nutschlitz 5.2 über den Nutgrund 5.1 zum Nutschlitz 5.2 verläuft.

Die Bypässe 18 der unterschiedlichen Stützstellen 11 derselben Statornut 5 sind beispielsweise jeweils derart entweder am Nutgrund 5.1, insbesondere im Nutgrund 5.1 oder in den Zahnflanken 4.2 am Nutgrund 5.1, oder im Nutverschluss 16 angeordnet, dass ein mäanderförmiger Kühlpfad 15 in der Statornut 5 gebildet ist.

Nach dem Ausführungsbeispiel in Fig.3 sind die Bypässe 18 der unterschiedlichen Stützstellen 11 derselben Statornut 5 in axialer Richtung gesehen von einer Stützstelle 11 zur nächsten Stützstelle 11 abwechselnd im Nutgrund 5.1 oder im Nutverschluss 16 ausgebildet, um den mäanderförmigen Kühlpfad 15 zu bilden.

Die elektrische Maschine 23 hat ein Gehäuse 24, in dem der erfindungsgemäße Stator 1 angeordnet ist. Die Statorwicklung 8 bildet an jeder Stirnseite des Stators 1 einen Wickelkopf 8.1. Innerhalb des Gehäuses 24 ist an jeder Stirnseite des Stators 1 ein den jeweiligen Wickelkopf 8.1 aufnehmender Wickelkopfkühlraum 25 zur Kühlung des jeweiligen Wickelkopfes 8.1 vorgesehen. Die Statornuten 5 des Stators 1 sind dabei ausgehend von einem der beiden Wickelkopfkühlräume 25 über den Kühlpfad 15 der Statornuten 5 bis in den anderen Wickelkopfkühlraum 25 durchströmbar, beispielsweise parallel, in Reihe oder mit einer Kombination von Parallel- und Reihenschaltung. Der jeweilige Wickelkopfkühlraum 25 ist nach radial innen bezüglich der Statorachse 2 von einer Ringwandung 26, beispielsweise einer Dichthülse, begrenzt. Die Dichthülse 26 kann beispielsweise Teil eines Spaltrohres sein, das in einen zwischen dem Stator 1 und einem Rotor 27 der elektrischen Maschine 23 gebildeten Luftspalt reicht und diesen in axialer Richtung bezüglich der Statorachse 2 durchragt.

Die Nutverschlüsse 16 der Statornuten 5 können jeweils durch ein einzelnes Nutverschlusselement gebildet sein, das in der jeweiligen Statornut 5 angeordnet und befestigt ist. Alternativ können die Nutverschlüsse 16 der Statornuten 5 einstückig oder mehrstückig an einem sogenannten Spaltrohr ausgeführt sein, das in einem Luftspalt zwischen dem Stator 1 und dem Rotor 27 der elektrischen Maschine 23 angeordnet ist und beispielsweise aus faserverstärktem Kunststoff (CFK,GFK) hergestellt sein kann.

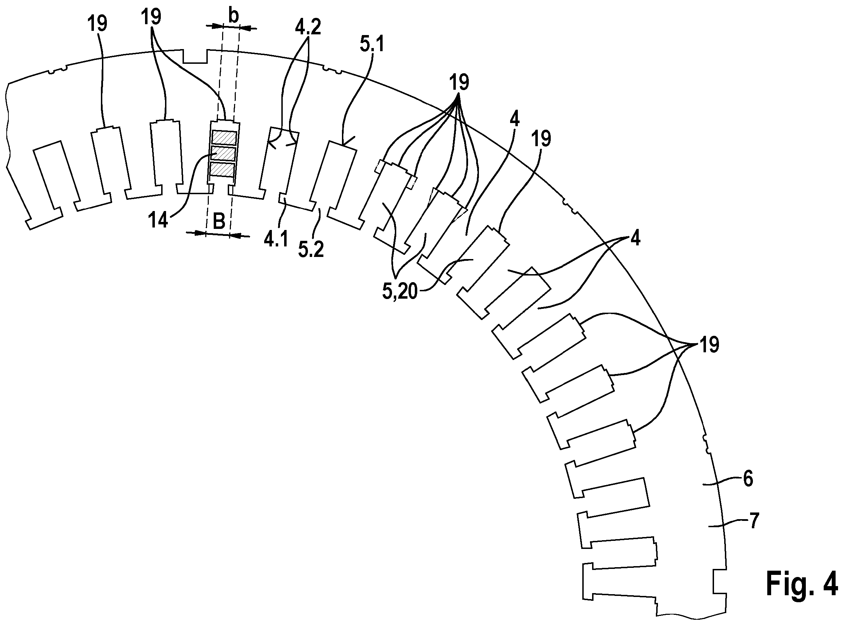

Fig.4 zeigt eine der Blechlamellen des erfindungsgemäßen Stators nach Fig.1 bis Fig.3.

Der Bypass 18 ist jeweils durch einen Bypasskanal am Nutgrund 5.1, insbesondere im Nutgrund 5.1 oder in den Zahnflanken 4.2 (in Fig.4 gestrichelt dargestellt) am oder nahe dem Nutgrund 5.1 , oder im Nutverschluss 16 der jeweiligen Statornut 5 gebildet. Der Bypasskanal 18 ist beispielsweise nutförmig und/oder hat eine Kanalbreite b, die kleiner ist als eine Leiterbreite B des Leiterbündels 10.

Die Bypässe 18 am Nutgrund 5.1 sind jeweils in den entsprechenden Blechlamellen 6 des Blechpakets 3 des Stators 1 ausgeführt.

Das Blechpaket 3 weist beispielsweise eine Vielzahl von identischen Blechlamellen 6 auf, wobei jede einzelne der identischen Blechlamellen 6 eine Vielzahl von Nut-Ausnehmungen 20 zur Bildung der Statornuten 5 aufweist. Bezüglich einer einzelnen der Blechlamellen 6 ist am Nutgrund 5.1, beispielsweise im Nutgrund 5.1, von bestimmten Nut-Ausnehmungen 20, die sich nach einem Muster bestimmen und über den Umfang der Blechlamelle 6 verteilt sind, eine Bypass-Ausnehmung 19 zur Bildung des Bypasskanals 18 vorgesehen und an den übrigen Nut-Ausnehmungen 20 der Blechlamelle 6 keine Bypass-Ausnehmung 19 ausgeführt. Nach dem Muster ist also an einem Teil der Nut-Ausnehmungen 20 der Blechlamelle 6 eine Bypass-Ausnehmung 19 ausgebildet und an dem übrigen Teil der Nut-Ausnehmungen 20 keine Bypass-Ausnehmung 19 ausgeführt.

Durch Verdrehen von manchen der identischen Blechlamellen 6 im Blechpaket 3 um die Statorachse 2 kann erreicht werden, dass die Bypässe 18 in den einzelnen Statornuten 5 jeweils an den gewünschten axialen Positionen und über eine gewünschte Länge gebildet werden.

## Patentansprüche

1. Stator einer elektrischen Maschine (23) mit einer Statorachse (2) und mit einem Blechpaket (3), an dem Statorzähne (4) und zwischen den Statorzähnen (4) liegende Statornuten (5) ausgebildet sind und das eine Vielzahl von Blechlamellen (6) umfasst, wobei die Statorzähne (4) über ein ringförmiges Statorjoch (7) miteinander verbunden sind, wobei in den Statornuten (5) jeweils ein einziger Leiter (9) oder ein mehrere Leiter (9) umfassendes Leiterbündel (10), insbesondere ein Stapel von Flachdrahtleitern, zur Bildung einer elektrischen Statorwicklung (8) vorgesehen ist, wobei die Statornuten (5) jeweils einen dem Statorjoch (7) zugewandten Nutgrund (5.1) und einen dem Nutgrund (5.1) abgewandten Nutschlitz (5.2) aufweisen, wobei in den Statornuten (5) jeweils mehrere, in axialer Richtung bezüglich der Statorachse (2) voneinander beabstandete Stützstellen (11) zur Abstützung des in der jeweiligen Statornut (5) liegenden Leiters (9) bzw. Leiterbündels (10) gebildet sind, wobei zwischen den Wandungen (5.1,4.2) der jeweiligen Statornut (5) und dem in der Statornut (5) angeordneten Leiter (9) bzw. Leiterbündel (10) zumindest ein Nutspalt gebildet ist, der einen sich in axialer Richtung erstreckenden Nutspaltkanal (14) bildet, der von einem Kühlmedium, insbesondere Öl, entlang einem Kühlpfad (15) durchströmbar ist, wobei der jeweilige Nutspaltkanal (14) an den Stützstellen (11) zumindest verengt ist,
**dadurch gekennzeichnet, dass**
- der Nutschlitz (5.2) der jeweiligen Statornut (5) von einem Nutverschluss (16) verschlossen ist,
- in der jeweiligen Statornut (5) an den Stützstellen (11) jeweils ein Bypass (18) vorgesehen ist zum Leiten des Kühlmediums an der verengten Stützstelle (11) im Nutspaltkanal (14) vorbei,
- die Bypässe (18) an den unterschiedlichen Stützstellen (11) derselben Statornut (5) derart an unterschiedlichen radialen Positionen angeordnet sind, dass ein mäanderförmiger Kühlpfad (15) in der Statornut (5) gebildet ist, und dass
- die Bypässe (18) der unterschiedlichen Stützstellen (11) derselben Statornut (5) jeweils derart entweder am Nutgrund (5.1), insbesondere im Nutgrund (5.1) oder in den Zahnflanken (4.2) am oder nahe dem Nutgrund (5.1), oder im Nutverschluss (16) ausgebildet sind, dass ein mäanderförmiger Kühlpfad (15) in der Statornut (5) gebildet ist.

2. Stator nach Anspruch 1, **dadurch gekennzeichnet, dass** die Bypässe (18) der unterschiedlichen Stützstellen (11) derselben Statornut (5) zur Bildung des mäanderförmigen Kühlpfads (15) von einer Stützstelle (11) zur nächsten Stützstelle (11) abwechselnd am Nutgrund (5.1), insbesondere im Nutgrund (5.1) oder in den Zahnflanken (4.2) am Nutgrund (5.1), oder im Nutverschluss (16) ausgebildet sind.

3. Stator nach einem der vorhergehenden Ansprüche, **dadurch gekennzeichnet, dass** der Bypass (18) jeweils durch einen Bypasskanal gebildet ist, wobei der Bypasskanal insbesondere eine Kanalbreite (b) hat, die kleiner ist als eine Leiterbreite (B) des Leiters (9) oder Leiterbündels (10).

4. Stator nach Anspruch 3, **dadurch gekennzeichnet, dass** das Blechpaket (3) eine Vielzahl von identischen Blechlamellen (6) aufweist, wobei jede einzelne der identischen Blechlamellen (6) eine Vielzahl von Nut-Ausnehmungen (20) zur Bildung der Statornuten (5) aufweist, wobei bezüglich einer einzelnen der Blechlamellen (6) am Nutgrund (5.1) von bestimmten Nut-Ausnehmungen (20), die sich nach einem Muster bestimmen und über den Umfang verteilt sind, eine Bypass-Ausnehmung (19) zur Bildung des Bypasskanals vorgesehen ist.

5. Stator nach Anspruch 4, **dadurch gekennzeichnet, dass** im Blechpaket (3) mehrere der identischen Blechlamellen (6) derart um die Statorachse (2) verdreht sind, dass die Bypässe (18) in den einzelnen Statornuten (5) an der bestimmten axialen Position und über eine bestimmte Länge gebildet sind.

6. Stator nach einem der vorhergehenden Ansprüche, **dadurch gekennzeichnet, dass** die Nutverschlüsse (16) der Statornuten (5) jeweils durch ein einzelnes Nutverschlusselement gebildet oder einstückig oder mehrstückig an einem Spaltrohr ausgeführt sind.

7. Stator nach einem der vorhergehenden Ansprüche, **dadurch gekennzeichnet, dass** die Stützstellen (11) gebildet sind durch Verdrehen von jeweils zumindest zwei Blechlamellen (6) des Blechpakets (3) um einen bestimmten Verdrehwinkel (ϕ) um die Statorachse (2).

8. Stator nach einem der vorhergehenden Ansprüche, **dadurch gekennzeichnet, dass** durch das Verdrehen von Blechlamellen (6) des Blechpakets (3) zur Bildung der jeweiligen Stützstelle (11) Stützabschnitte (6.1) der Blechlamellen (6) gebildet sind, die von gegenüberliegenden Seiten der jeweiligen Statornut (5) in die Statornut (5) vorstehen, um den Leiter (9) bzw. das Leiterbündel (10) zwischen den Stützabschnitten (6.1) an Halteflächen (13) des Leiters (9) bzw. Leiterbündels (10) zu halten, insbesondere einzuklemmen.

9. Elektrische Maschine mit einem Gehäuse(24), in dem ein Stator (1) nach einem der vorhergehenden Ansprüche angeordnet ist, **dadurch gekennzeichnet, dass** die Statorwicklung (8) an jeder Stirnseite des Stators (1) einen Wickelkopf (8.1) bildet, wobei innerhalb des Gehäuses (24) an jeder Stirnseite des Stators (1) ein den jeweiligen Wickelkopf (8.1) aufnehmender Wickelkopfkühlraum (25) zur Kühlung des jeweiligen Wickelkopfes (8.1) vorgesehen ist, wobei die Statornuten (5) ausgehend von einem der beiden Wickelkopfkühlräume (25) über den Kühlpfad (15) der Statornuten (5) bis in den anderen Wickelkopfkühlraum (25) durchströmbar sind.

## Claims

1. Stator of an electric machine (23) having a stator axis (2) and having a laminated core (3), on which stator teeth (4) and stator slots (5) lying between the stator teeth (4) are formed and which comprises a multiplicity of sheet-metal laminations (6), wherein the stator teeth (4) are connected to each other via an annular stator yoke (7), wherein, in each of the stator slots (5), a single conductor (9) or a conductor bundle (10) comprising a plurality of conductors (9), in particular a stack of flat-wire conductors, is provided for forming an electrical stator winding (8), wherein the stator slots (5) each have a slot bottom (5.1), facing the stator yoke (7), and a slot recess (5.2) facing away from the slot bottom (5.1), wherein, in each of the stator slots (5), a plurality of support points (11) spaced apart from one another in the axial direction with respect to the stator axis (2) are formed to support the conductor (9) or conductor bundle (10) lying in the respective stator slot (5), wherein at least one slot gap is formed between the walls (5.1, 4.2) of the respective stator slot (5) and the conductor (9) or conductor bundle (10) arranged in the stator slot (5), which slot gap forms a slot gap channel (14) which extends in the axial direction and can be flowed through by a cooling medium, in particular oil, along a cooling path (15), wherein the respective slot gap channel (14) is at least narrowed at the support points (11), **characterized in that**
- the slot recess (5.2) of the respective stator slot (5) is closed by a slot closure (16),
- a bypass (18) is provided in each case in the respective stator slot (5) at the support points (11), for conducting the cooling medium past the narrowed support point (11) in the slot gap channel (14),
- the bypasses (18) are arranged at the different support points (11) of the same stator slot (5) at different radial positions in such a way that a meandering cooling path (15) is formed in the stator slot (5), and **in that**
- the bypasses (18) of the different support points (11) of the same stator slot (5) are each formed either on the slot bottom (5.1), in particular in the slot bottom (5.1) or in the tooth flanks (4.2) at or near the slot bottom (5.1), or in the slot closure (16), in such a way that a meandering cooling path (15) is formed in the stator slot (5).

2. Stator according to Claim 1, **characterized in that** the bypasses (18) of the different support points (11) of the same stator slot (5) are designed alternately on the slot bottom (5.1), in particular in the slot bottom (5.1) or in the tooth flanks (4.2) at the slot bottom (5.1), or in the slot closure (16), in order to form the meandering cooling path (15) from one support point (11) to the next support point (11).

3. Stator according to either of the preceding claims, **characterized in that** the bypass (18) is formed in each case by a bypass channel, wherein the bypass channel has, in particular, a channel width (b) which is smaller than a conductor width (B) of the conductor (9) or conductor bundle (10).

4. Stator according to Claim 3, **characterized in that** the laminated core (3) has a plurality of identical sheet-metal laminations (6), wherein each single one of the identical sheet-metal laminations (6) has a plurality of slot hollows (20) for forming the stator slots (5), wherein a bypass hollow (19) is provided for the formation of the bypass channel with respect to a single one of the sheet-metal laminations (6) at the slot bottom (5.1) of certain slot hollows (20), which are determined according to a pattern and are distributed over the circumference.

5. Stator according to Claim 4, **characterized in that**, in the laminated core (3), a plurality of the identical sheet-metal laminations (6) are rotated around the stator axis (2) in such a way that the bypasses (18) are formed in the individual stator slots (5) at the specified axial position and over a certain length.

6. Stator according to any one of the preceding claims, **characterized in that** the slot closures (16) of the stator slots (5) are each formed by a single slot closure element or are designed in one piece or in multiple pieces on a can.

7. Stator according to any one of the preceding claims, **characterized in that** the support points (11) are formed by rotating in each case at least two sheet-metal laminations (6) of the laminated core (3) by a certain angle of rotation (ϕ) around the stator axis (2).

8. Stator according to one of the preceding claims, **characterized in that**, by the rotation of sheet-metal laminations (6) of the laminated core (3) for forming the respective support point (11), support sections (6.1) of the sheet-metal laminations (6) are formed, which support sections project from opposite sides of the respective stator slot (5) into the stator slot (5), in order to hold, in particular to clamp in, the conductor (9) or the conductor bundle (10) between the support sections (6.1) on holding surfaces (13) of the conductor (9) or conductor bundle (10).

9. Electric machine having a housing (24), in which a stator (1) according to any one of the preceding claims is arranged, **characterized in that** the stator winding (8) forms a winding head (8.1) on each end face of the stator (1), wherein a winding head cooling chamber (25) which receives the respective winding head (8.1) is provided within the housing (24) on each end face of the stator (1) for cooling the respective winding head (8.1), wherein the stator slots (5) can be flowed through, starting from one of the two winding head cooling chambers (25), via the cooling path (15) of the stator slots (5) as far as into the other winding head cooling chamber (25).

## Revendications

1. Stator d'une machine électrique (23) avec un axe (2) de stator et avec un empilage de tôles (3), sur lequel sont formées des dents (4) de stator et des rainures (5) de stator situées entre les dents (4) de stator et qui comprend une pluralité de lamelles de tôle (6), les dents (4) de stator étant reliées entre elles par une culasse (7) de stator annulaire, un conducteur unique (9) ou un faisceau (10) de conducteurs comprenant plusieurs conducteurs (9), en particulier une pile de fils conducteurs plats, étant prévu dans les rainures (5) de stator pour former un enroulement (8) de stator électrique, les rainures (5) de stator comportant chacune une base (5.1) de rainure tournée vers la culasse (7) de stator et une entaille (5.2) de rainure opposée à la base (5.1) de rainure, plusieurs points d'appui (11) espacés les uns des autres dans la direction axiale par rapport à l'axe (2) de stator étant respectivement formés dans les rainures (5) de stator pour soutenir le conducteur (9) ou le faisceau (10) de conducteurs situé dans la rainure (5) de stator respective, au moins une fente de rainure étant formée entre les parois (5.1, 4.2) de la rainure (5) de stator respective et le conducteur (9) ou le faisceau (10) de conducteurs disposé dans la rainure (5) de stator, laquelle forme un canal (14) de fente de rainure s'étendant dans la direction axiale, qui peut être traversé par un fluide de refroidissement, en particulier de l'huile, le long d'un trajet de refroidissement (15), le canal (14) de fente de rainure respectif étant au moins rétréci sur les points d'appui (11), **caractérisé en ce que**
- l'entaille (5.2) de rainure de la rainure (5) de stator respective est fermée par une fermeture (16) de rainure,
- une dérivation (18) est respectivement prévue dans la rainure (5) de stator respective sur les points d'appui (11) pour conduire le fluide de refroidissement le long du point d'appui (11) rétréci dans le canal (14) de fente de rainure,
- les dérivations (18) sont disposées sur différentes positions radiales sur les différents points d'appui (11) de la même rainure (5) de stator de telle manière qu'un trajet de refroidissement (15) sinueux est formé dans la rainure (5) de stator, et que
- les dérivations (18) des différents points d'appui (11) de la même rainure (5) de stator sont formées respectivement soit sur la base (5.1) de rainure, en particulier dans la base (5.1) de rainure soit dans les flancs de dent (4.2) sur la ou à proximité de la base (5.1) de rainure, ou dans la fermeture (16) de rainure, de telle manière qu'un trajet de refroidissement (15) sinueux est formé dans la rainure (5) de stator.

2. Stator selon la revendication 1, **caractérisé en ce que** les dérivations (18) des différents points d'appui (11) de la même rainure (5) de stator sont formées pour former le trajet de refroidissement (15) sinueux depuis un point d'appui (11) au point d'appui (11) suivant en alternance sur la base (5.1) de rainure, en particulier dans la base (5.1) de rainure ou dans les flancs de dent (4.2) sur la base (5.1) de rainure ou dans la fermeture (16) de rainure.

3. Stator selon l'une des revendications précédentes, **caractérisé en ce que** la dérivation (18) est formée respectivement par un canal de dérivation, le canal de dérivation présentant en particulier une largeur de canal (b) qui est inférieure à une largeur de conducteur (B) du conducteur (9) ou du faisceau (10) de conducteurs.

4. Stator selon la revendication 3, **caractérisé en ce que** l'empilage de tôles (3) comporte une pluralité de lamelles de tôle (6) identiques, chacune des lamelles de tôle (6) identiques comportant une pluralité d'évidements (20) de rainure pour former les rainures (5) de stator, un évidement de dérivation (19) étant prévu pour former le canal de dérivation par rapport à une des lamelles de tôle (6) sur la base (5.1) de rainure d'évidements (20) de rainure déterminés, qui sont déterminés selon un motif et sont répartis sur la périphérie.

5. Stator selon la revendication 4, **caractérisé en ce que** plusieurs des lamelles de tôle (6) identiques sont tournées, dans l'empilage de tôles (3), autour de l'axe (2) de stator de telle manière que les dérivations (18) sont formées dans les diverses rainures (5) de stator dans la position axiale déterminée et sur une longueur déterminée.

6. Stator selon l'une des revendications précédentes, **caractérisé en ce que** les fermetures (16) de rainure des rainures (5) de stator sont formées chacune par un élément de fermeture de rainure unique ou sont réalisées d'une seule pièce ou de plusieurs pièces sur une gaine.

7. Stator selon l'une des revendications précédentes, **caractérisé en ce que** les points d'appui (11) sont formés par rotation de respectivement au moins deux lamelles de tôle (6) de l'empilage de tôles (3) d'un angle de rotation (ϕ) déterminé autour de l'axe (2) de stator.

8. Stator selon l'une des revendications précédentes, **caractérisé en ce que** la rotation de lamelles de tôle (6) de l'empilage de tôles (3) pour former le point d'appui (11) respectif permet de former des sections d'appui (6.1) des lamelles de tôle (6), qui font saillie dans la rainure (5) de stator respective depuis des côtés opposés de la rainure (5) de stator respective pour maintenir, en particulier coincer, le conducteur (9) ou le faisceau (10) de conducteurs entre les sections de support (6.1) sur des surfaces de maintien (13) du conducteur (9) ou du faisceau (10) de conducteurs.

9. Machine électrique avec un boîtier (24), dans lequel est disposé un stator (1) selon l'une des revendications précédentes, **caractérisée en ce que** l'enroulement (8) de stator forme une tête d'enroulement (8.1) sur chaque côté frontal du stator (1), un espace de refroidissement (25) de tête d'enroulement recevant la tête d'enroulement (8.1) respective étant prévu à l'intérieur du boîtier (24), sur chaque côté frontal du stator (1), pour refroidir la tête d'enroulement (8.1) respective, les rainures (5) de stator pouvant être traversées en partant de l'un des deux espaces de refroidissement (25) de tête d'enroulement jusque dans l'autre espace de refroidissement (25) de tête d'enroulement en passant par le trajet de refroidissement (15) des rainures (5) de stator.
